# EUROPEAN PATENT SPECIFICATION

(11) **EP 3 845 058 B1**
(45) Date of publication and mention of the grant of the patent: **06.03.2024**
(21) Application number: 20174716.9
(22) Date of filing: 14.05.2020
(51) Int. Cl.: A01G 31/02, A01G 9/14, A01G 9/24, A01G 31/06

(54) **HYDROPONIC APPARATUS**
HYDROPONISCHE VORRICHTUNG
APPAREIL HYDROPONIQUE

(30) Priority: 30.12.2019 GB 201919415
(43) Date of publication of application: 07.07.2021
(73) Proprietor: Seven Seas Productions Ltd, Mayfair London W1J 6HE (GB)
(72) Inventor: Girardin, Maxime, Mayfair, London W1J 0DW (GB); Montague, Jonathan Wesley, Mayfair, London W1J 0DW (GB)
(74) Representative: Hocking, Adrian Niall

(56) References cited:
- EP-A1- 3 453 252
- WO-A1-2013/066254
- US-A- 5 862 628
- US-A1- 2018 027 747
- US-A1- 2018 035 624
- US-B2- 10 034 435

## Description

The present invention relates to a hydroponic apparatus for growing plants.

With a world population to exceed 10 billion individuals by 2040, the earth'e ability to provide food in a traditional way will be under heavy stress. Adding climate change and its significant impact on weather and pest, it is critical to find new agricultural models which can provide food in a regular and reliable way.

A solution to this problem is to grow food under a controlled environment, limiting external factors that impact on production to an absolute minimum. There are existing at least partly automated hydroponic apparatus which are used in large scale installations.

The apparatus for this needs to be adaptable to any surroundings, easily scalable in size and requires a limited to no trained workforce.

Examples of hydroponic apparatuses known in the art include those disclosed in US10034435B2, EP3453252A1, and US5862628A, with the use of ozone sterilization thereof disclosed in US2018/027747A1, and the use of robotics disclosed in WO2013/066254A1.

It is an object of the present invention to provide an apparatus to alleviate at least one of the above-mentioned problems.

According to the present invention there is provided a hydroponic apparatus comprising an enclosed housing, a plurality of levels or areas provided in the enclosed housing for supporting plant containers for containing seeds/plants to be grown, a conveyor system for moving the plant containers on each level or in each area and/or from one level or area to another level or area within the enclosed housing, and a control system for controlling environmental plant growing conditions in the enclosed housing, whereby the conveyor system is arranged to move the plant containers to different levels or areas within the enclosed housing at different stages of growth of the plants in the containers, characterized in that the conveyor system is arranged to tilt the plant containers relative to the horizontal to enable water to drain from the plant containers

Preferably, the conveyor system is arranged to move the plant containers in horizontal or substantially horizontal directions on each level and vertical or substantially vertical directions from one level to another level within the enclosed housing.

In a preferred embodiment, the conveyor system comprises a conveyor mechanism for moving the plant containers on each level, a lift mechanism for moving the plant containers from one level to another level, and a transfer device for transferring the plant containers from the conveyor mechanism on one level to the lift mechanism and from the lift mechanism to the conveyor mechanism on another level. The lift mechanism may comprise the transfer device. The conveyor mechanism may enable the plant containers to be moved horizontally in a level. The lift mechanism may enable the plant containers to be moved vertically between levels.

The apparatus preferably also includes a support area for containing an irrigation system for irrigating the plants in the containers and an air circulation system for circulating air within the enclosed housing. The apparatus may also include a pipe network for transferring water from the irrigation system to each of the plant containers supported on the levels within the housing. The air circulating system may comprise an air cooler and an ozone generator for circulating cool air and ozone within the enclosed housing.

In another embodiment, the apparatus further includes a plurality of robotic stations, and the conveyor system is arranged to move the plant containers to and from each of the robotic stations. The transfer device of the conveyor system may be arranged to move the plant containers to and from the robotic stations. Each robotic station may have a conveyor mechanism for moving a said plant at said robotic station.

The robotic stations may comprise one or more of an automatic cleaning station for cleaning the plant containers, a sowing machine for sowing seeds in the plant containers, a growing media cleaning station for cleaning unwanted plant residue from the plant containers, and an automated harvesting station comprising cutters for cutting parts of plants in the containers and a collector for collecting the cut parts.

The hydroponic apparatus enables the plants being grown to have a high yield and have a high quality since the apparatus operates in a closed controlled environment.

The apparatus may be used indoors or outdoors and close to, or where, people live. This has the benefit of local production limiting transport therefore securing supply chain and limiting fuel emissions. The apparatus enables a steady and reliable source of food to be provided all year round.

The apparatus does not require chemicals to grow the plants and can use pure air and water.

The enclosed housing of the hydroponic apparatus may comprise a cabinet and may be for personal or business use.

The hydroponic apparatus may be fully automated. The apparatus may be fitted with robotics to achieve this. By the hydroponic apparatus being automated enables it to be small scale. The hydroponic apparatus may be contained in a container. This enables it to be easily transported and installed in a wide variety of harsh and remote locations.

The hydroponic apparatus enables plants to be grown from germination to harvesting. The apparatus may include a plant nursery area or level or layer where germination happens. The apparatus may have different areas where plants grow. The areas may have different environments to suit changing requirements of the plants as they grow and the plants are moved or transferred between the different areas to enable them to grow to the required stage or until their crop is fully ripe. The plants may then be transferred to a delivery station. Each area may be at least part of at least one level or layer forming a vertical stack of levels or layers. The automated systems of the apparatus are designed to perform tasks usually done by hand. The lift/conveyor mechanisms, which may comprise belts, and which are automated, move plant containers in and between the different levels or layers. The plant container may comprise a gutter. The apparatus may be automated to identify and move the plants onto different levels depending on the requirements of the plants. The use of the lift/conveyor mechanisms enables the apparatus to provide a hand-free multilayer hydroponic growing system.

Since the hydroponic apparatus does not require direct contact with humans and the plants growing in the apparatus do not require direct contact with external air/water, the apparatus provides the plants with a clean and pure environment.

The hydroponic apparatus may have a delivery door where plants for harvesting, harvested plants or harvested crops can be accessed. The delivery door provides the only access to a growing area containing the levels or areas provided in the enclosed housing for supporting the plant containers. This limited access drastically reduces the likelihood of any pollutants, microbes and other micro-organisms entering the controlled environment of the apparatus, and acts as a barrier when closed. Consequently, the quality of the plants is effectively preserved and the plants are effectively prevented from being potentially contaminated by external factors. By the door providing the only access to the growing area, this significantly reduces the need for cleaning and maintaining the apparatus.

The apparatus may include nano-filters, reverse-osmosis, ozone generators and ultra-violet (UV) water treatment to continuously clean and purify air and water circulating in the apparatus.

The apparatus may include a lighting system, an irrigation system, a ventilation system and/or a climate control system. These enable the plants to be provided with the required light spectrum, oxygen, humidity, and water. The apparatus may include a nutrient system. The apparatus may enable irrigating water for the plants to have the required pH. All this enables the growth efficiency of plants to be maximized. The apparatus may be provided with at least one fertilizer tank, water tank and/or battery to provide required inputs into the apparatus in case of power outage.

The lighting system may comprise hanging LED stripes. This enables greater proximity to the plants maximizing light output and minimizing light waste.

The apparatus may be operated by remote control. This enables a user to remotely manage the controlled environment.

The apparatus may have an automated control system, which may comprise software. The automated control system may initiate growing of a new set of plants to enable them to ripen by a predetermined date. The automated control system may be arranged to control the lighting and/or irrigation system. The automated control system removes any requirement of human supervision or need to tend the plants during their growth cycle.

The automated control system may control the use of the lift/conveyor mechanisms enabling plants to be moved within the enclosed housing automatically. This enables the plants to meet the requirements they need for their different growing phases.

In another aspect, there is provided a method for growing plants comprising the steps of:-storing plant containers containing seeds/plants in an enclosed housing;
controlling environmental plant growing conditions in the enclosed housing; and
automatically moving the plant containers via a conveyor system to different levels or areas within the enclosed housing depending on the different stages of growth of the plants in the containers, and characterized in that the conveyor system is arranged to tilt the plant containers relative to the horizontal to enable water to drain from the plant containers.

In one embodiment, the plant containers can be automatically moved within the enclosed housing to and from robotic stations, at which one or more of the following activities can be automatically carried out:
cleaning the plant containers;
sowing seeds in the plant containers;
removing unwanted plant residue from the containers; and
cutting parts from the plants in the containers and collecting the cut parts.

Embodiments of the present invention will now be described, by way of example, with reference to the accompanying schematic drawings, in which:
Figure 1 is a front view of a hydroponic apparatus in accordance with a first embodiment of the present invention;
Figure 2 is a simplified view of the inside of the apparatus from the front;
Figure 3 is a more detailed view of part of the inside of the apparatus from the front;
Figure 4 is a plan view of part of one level in the apparatus;
Figure 5 is a sectional view taken along lines 5-5 of Figure 3;
Figure 6 is a front view of a lift system for the apparatus;
Figures 7 and 8 are side views of part of the lift system being in a retracted and an extended state;
Figures 9 and 10 are isometric views of part of the lift system;
Figure 11 is a view of a support area of the apparatus;
Figure 12 is a view of a controller for a lift mechanism of the apparatus;
Figure 13 is a plan view of a sheet separating a growing area of the apparatus from the support area;
Figures 14 and 15 are sectional views, similar to Figure 4, showing the passage of elongated plant containers through the apparatus;
Figure 16 is a sectional view of a hydroponic apparatus in accordance with a second embodiment of the present invention;
Figure 17 is a more detailed sectional view of the apparatus of Figure 16 showing a stack of robotic stations of the apparatus;
Figures 18 and 19 are isometric views of the stack of robotic stations;
Figure 20 is a more detailed sectional view of a harvesting robotic station of the stack of robotic stations;
Figure 21 is a longitudinal view taken along lines 21-21 of Figure 20;
Figures 22 and 23 are isometric views of the harvesting robotic station;
Figure 24 is a more detailed sectional view of a sowing machine robotic station of the stack of robotic stations;
Figure 25 is a longitudinal view taken along lines 25-25 of Figure 24;
Figure 26 is a plan view of the harvesting robotic station;
Figure 27 is an isometric view of the harvesting robotic station;
Figure 28 is a more detailed sectional view of an elongated plant container robotic cleaning station of the stack of robotic stations;
Figure 29 is a longitudinal view taken along lines 29-29 of Figure 28;
Figure 30 is a plan view of the elongated plant container robotic cleaning station;
Figure 31 is an isometric view of the elongated plant container robotic cleaning station;
Figure 32 is a more detailed sectional view of a growing media robotic cleaning station of the stack of robotic stations;
Figure 33 is a longitudinal view taken along lines 33-33 of Figure 32;
Figures 34 and 35 are isometric views of the growing media robotic cleaning station; and
Figure 36 is a plan view of the growing media robotic cleaning station.

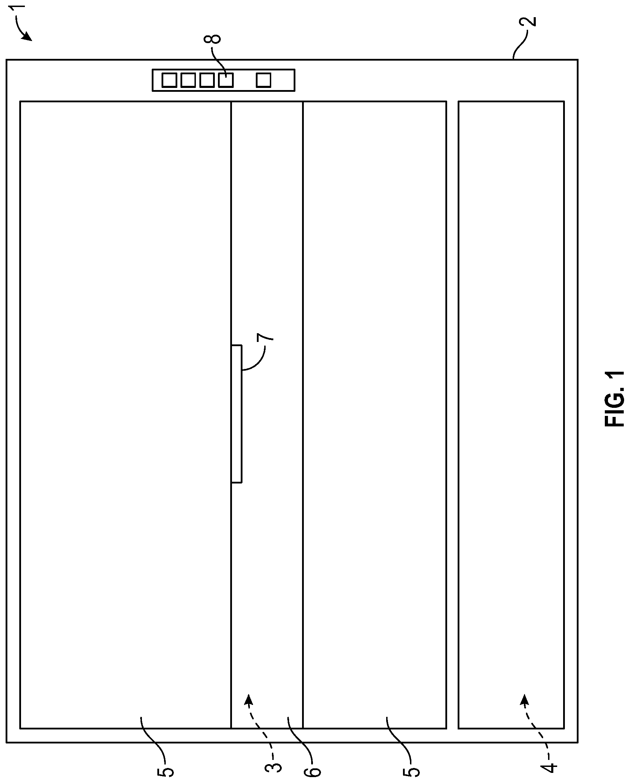

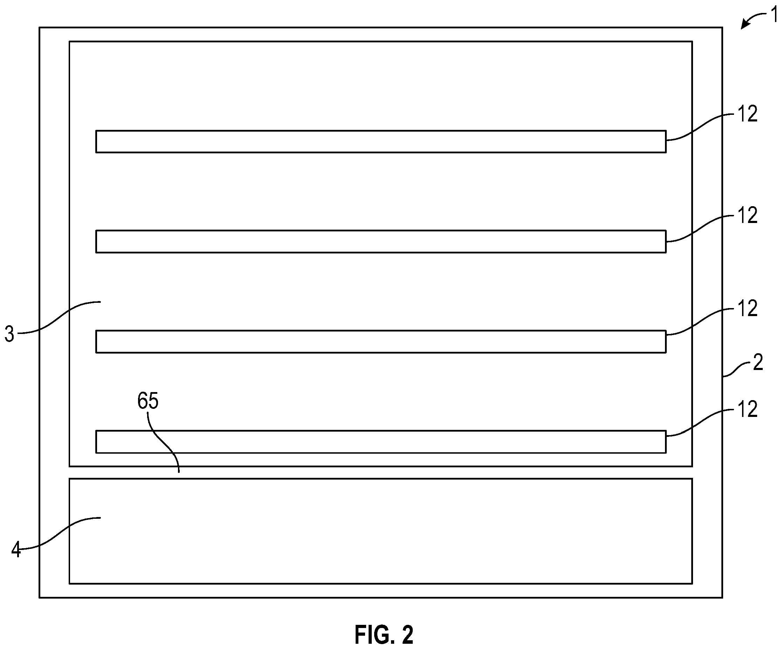

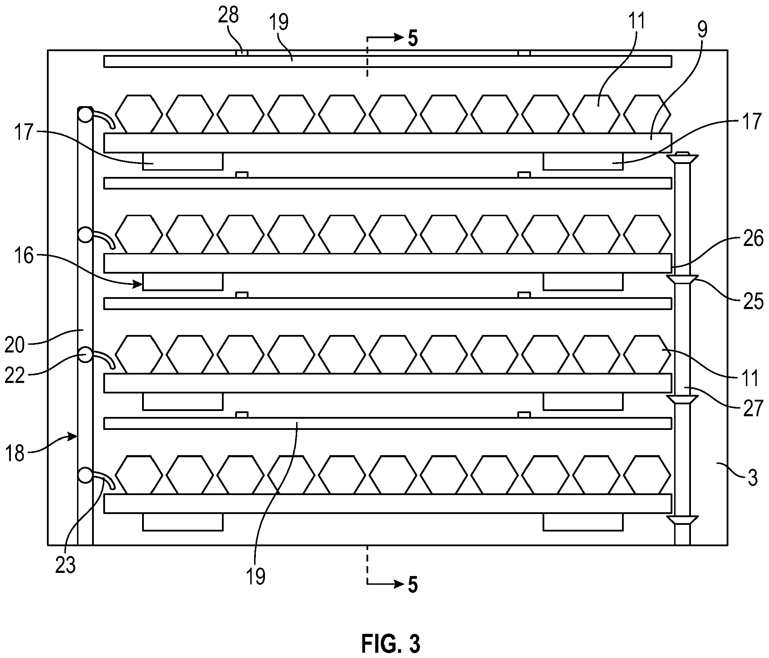

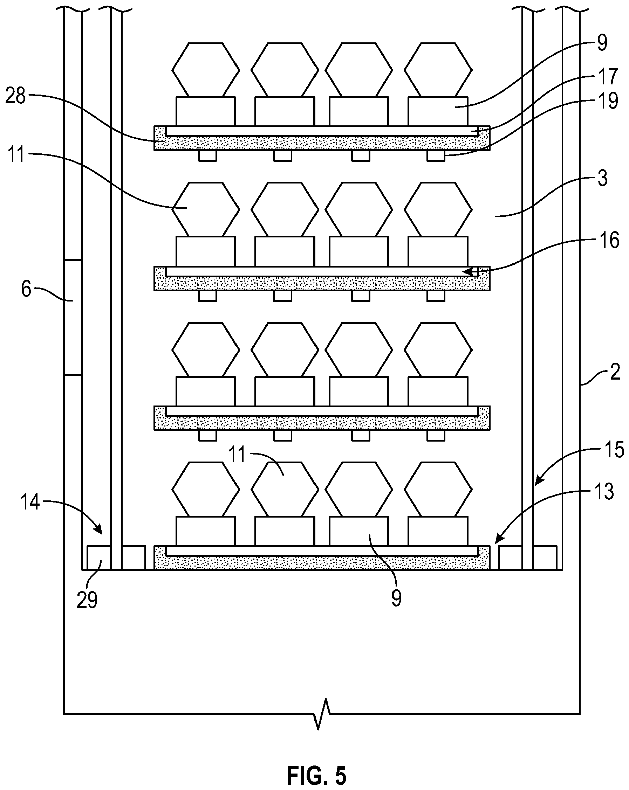

Referring to Figures 1 to 5 of the accompanying drawings, a hydroponic apparatus or pod 1 according to a first embodiment of the invention has a housing 2 comprising a frame which may be of stainless steel or any other suitable metal or hardened materials. The housing 2 houses a growing area 3 and a support section or area 4 below. The external back and the sides of the housing 2 are fully closed by metal sheets. A part of a front side of the housing 2 which covers the front of the growing area 3 comprises two fixed main windows 5 made of glass or plexiglass allowing a person to view the inside of the growing area at all times. Between these two fixed windows 5 is an openable delivery window or door 6 which comprises a metal frame and a transparent material such as glass or a plexiglass sheet. The door 6 has a handle 7 so that one can open the door 6 outwardly. The door 6 may be 2 metres long and 40 cm high. The delivery door 6 may have a seal which is made of a polymer, such polyethylene, or any other suitable flexible polymer material, such as a thermoplastic material, synthetic material, or rubber, so that the inside of the growing area 3 is sealed from the external environment when the door 6 is closed. The part of the front side of the housing 2 which covers the support section 4 is covered by metal sheeting to hide systems inside the support section 4. Located on the right-hand side of the housing 2 in Figure 1 are control buttons 8 which allow a user to choose an elongated plant container or carrier 9 from any layer or level in the growing area 3 one wants to bring down to the door 6 so that any plant in the elongated plant container 9 can be harvested, trimmed or removed.

The elongated plant container 9 may be 2 metres long and contains a growing medium. The elongated plant container 9 has a series of holes 10 providing access to the growing medium and each hole 10 can accommodate a plant 11. Each hole 10 may be round or square or have any other suitable shape. The number of plants that an elongated plant container 9 is designed to have depends on the species. There may be 7 to 100 plants per elongated plant container 9. A stream of water delivers the plants nutrients through the planting medium inside the elongated plant container 9.

The elongated plant container 9 acts as a carrier for plants 11 enabling them to be moved around the growing area 3 safely while always providing for the essential requirements for the plants.

The growing area 3 has a vertical stack of four levels or layers 12 of cultivation.

The growing area 3 has a multi-level elongated plant container moving system 13 supported by the frame of the housing 2. The multi-level moving system 13 includes a lift mechanism 14, 15 at its front and at its rear. The lift mechanisms 14, 15 are used for moving the elongated plant containers 9 vertically to the different cultivation or growing levels 12 as well as to the delivery door 6.

Each level of the multi-level moving system 13 has a built-in conveyor mechanism 16 extending between the pair of lift mechanisms 14, 15. Each conveyor mechanism 16 is arranged to move the elongated plant container 9 horizontally from one end to the other where it can be picked up by the relevant lift mechanism 14, 15. Each conveyor mechanism 16 comprises a pair of conveyors 17 wherein one conveyor 17 is located slightly higher up than the other conveyor 17 to produce a slight tilt in the elongated plant containers 9 transported by the conveyor mechanism 16. This tilt may be a 2° angle relative to the horizontal to allow for the regular flow of water through the elongated plant container 9.

The conveyor mechanism 16 for each of the top two layers 12 may tilt their elongated plant containers 9 at, say, +2° and the conveyor mechanism 16 for each of the other two layers 12 may tilt their elongated plant containers 9 at, say, -2° to allow for the recirculation of water. Therefore, the top two layers 12 feed water into the bottom two layers 12. This can reduce the electricity consumption of pumps for pumping water for irrigating the plants in the elongated plant containers 9 by up to 40%.

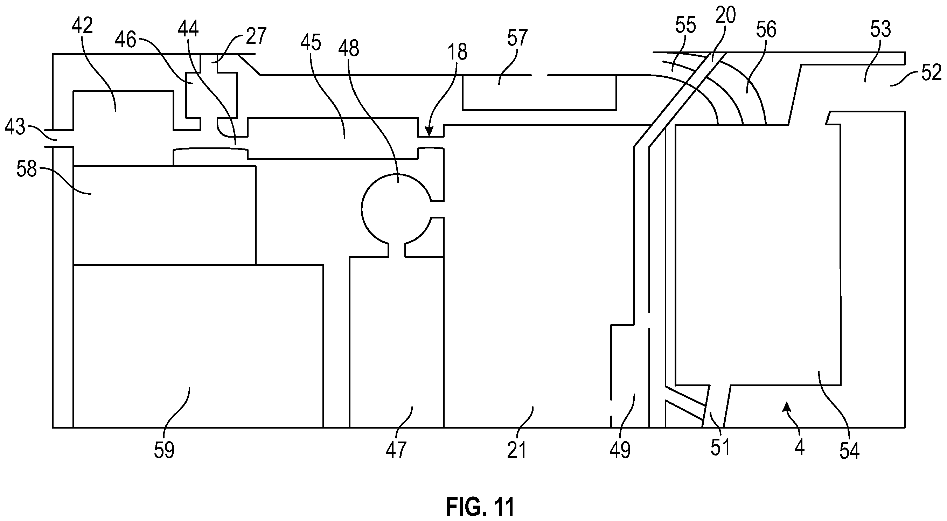

The frame of the housing 2 also provides support for an irrigation system 18 and growth lighting 19 for each cultivation layer 12. The irrigation system 18 and lighting 19 provide the plants' requirements as they grow in elongated plant containers 9 on that layer 12. The irrigation system 18 has a vertical or main irrigation pipe 20, which may be PVC or polyester, on one side of the conveyor mechanism 16. The pipe 20 is used to carry water and nutrients from a main water tank 21 (see Figure 11) located in the support section 4 to a distribution pipe 22 for each cultivation layer wherein the distribution pipe 22 runs horizontally alongside the one side of the cultivation layer 12. Each distribution pipe 22 has a series of small flexible pipes 23 extending from it to deliver water at precise locations to elongated plant containers 9 on the conveyor mechanism 16 for that layer 12. The elongated plant container 9 has a wide opening 24 adjacent one end at its top to receive the flow of water from the flexible pipe 23. The tilt of the elongated plant container 9 causes water delivered to the container 9 to run by gravity towards the other end of the container 9 bringing water and nutrients to roots of plants 11 in the container 9. A water collector 25 is positioned at the other side of the conveyor mechanism 16 to collect water from the elongated plant container 9 via a drain 26 at the opposite end of the container 9 to the wide opening 24 and at the bottom of the container 9. The water collectors 25 are angled slightly to discharge water from the elongated plant containers 9 into a down or return pipe 27 that carries the water back to the support section 4 to be treated before returning to the main tank 21 and then being recirculated again.

The lighting 19 is mounted on sections 28 of the frame wherein the sections 28 may comprise metal. The frame sections 28 hold the lighting 19 at a predefined distance from the plants 11. The lighting 19 may comprise agricultural growing LEDs.

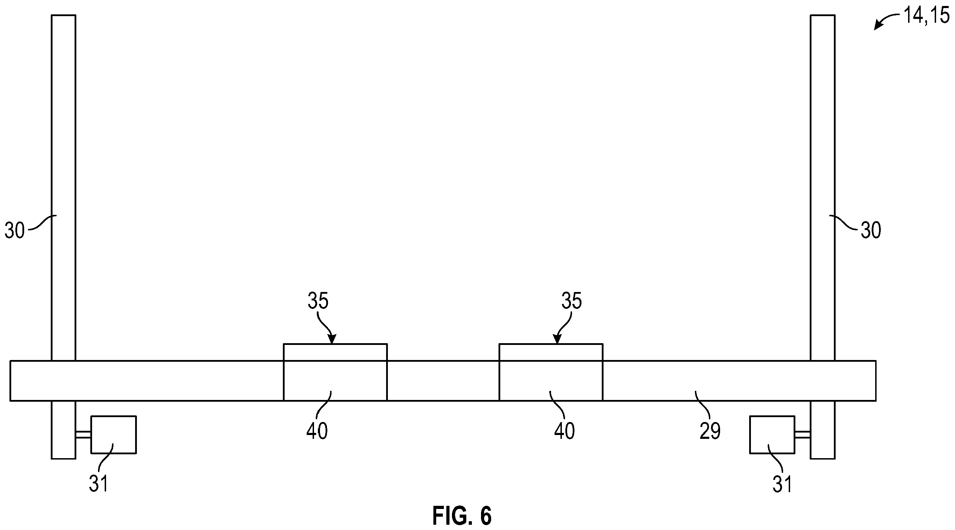

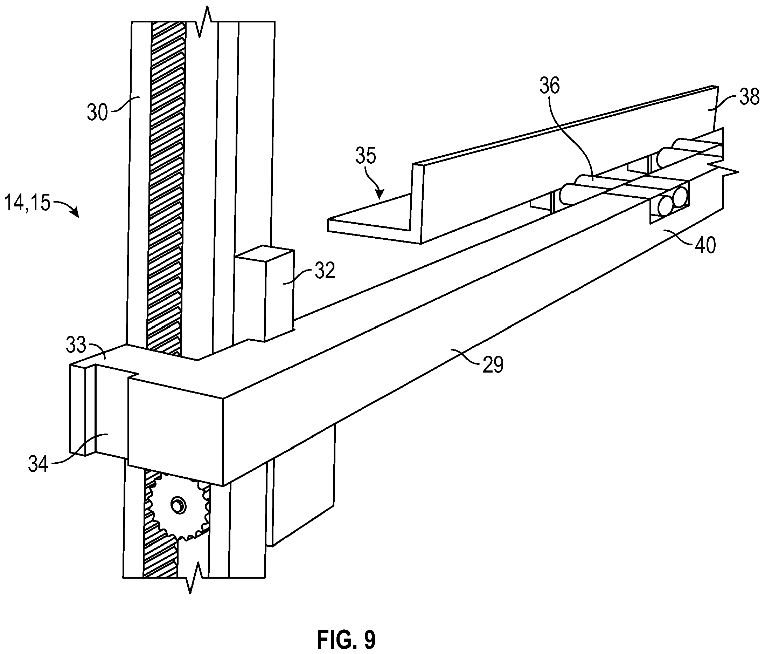

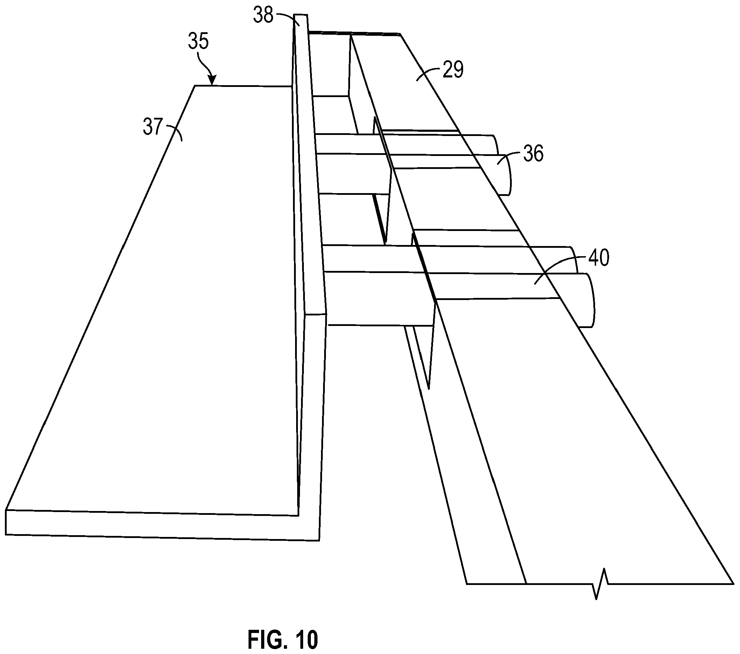

Referring to Figures 6 to 10, each lift mechanism 14, 15 has a main member or structure or frame 29 which may be of metal. The main member 29 extends between a pair of drive belts 30 wherein each belt 30 is connected to a motor 31, which may be an electric motor, with gearing. Each belt 30 may be made of polyester or other flexible material. The main member 29 has a fixed connection 32 to each belt 30, which may be by a welded or bolted section of metal, so that movement of the belts 30 by the motors 31 causes the main member 29 to move up and down. Each end of the main member 29 has an L-shaped extension 33 which extends beyond the belt 30. A side of the L-shaped extension 33 which faces away from the belt 30 has a guide recess 34 for receiving a rail (not shown) mounted in the housing 2 wherein the guide recess and rail stabilizes/steadies the lift mechanism 14, 15 when in operation.

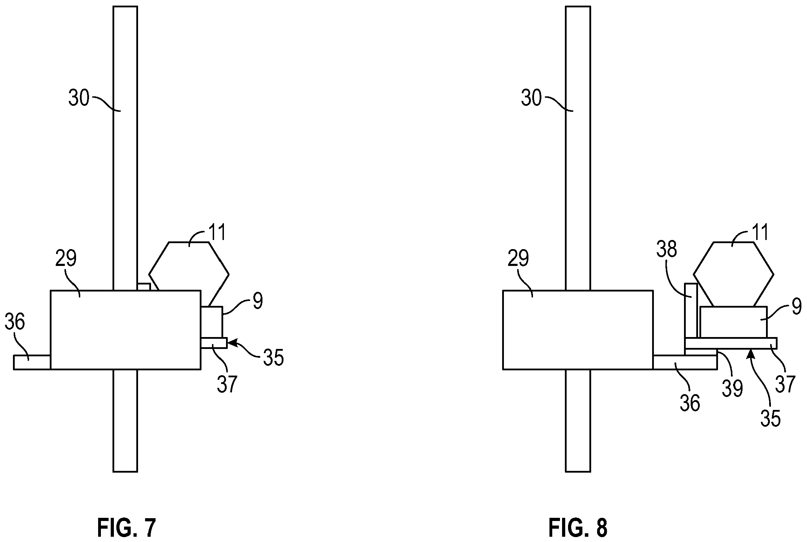

A transfer device preferably in the form of an L-shaped member 35 is mounted on a pair of piston units 36 which each extend through the main member 29. The L-shaped member 35 has a horizontal part or carrying platform 37 that is arranged to hold one of the elongated plant containers 9. The underside of a vertical part 38 of the L-shaped member 35 is connected by a welded connection 39 to each piston unit 36. Each piston unit 36 is driven by a motor 40, which may be an electric motor, located in the main member 29. The piston unit 36 can extend to either side of the main member 29 to provide additional movements to the carrying platform 37. Each piston unit 36 may comprise more than one piston. The L-shaped member 35 is shown in a retracted position in Figure 7 and the L-shaped member 35 is shown in a deployed or extended position in Figure 8.

Referring to Figure 11, the support area 4 contains part of the irrigation or water network system 18 and part of an air circulation system 41.

The water network system 18 comprises a reverse osmosis system 42 connected by a hose inlet 43 to a water supply to the building or vessel that the apparatus 1 is located in. The reverse osmosis system 42 is connected by a pipe 44 to a UV light box 45. The return pipe 27 is connected to the pipe 44 between the reverse osmosis system 42 and the UV light box 45 and there is a filter 46 in the return pipe 27 shortly before it joins the pipe 44. Thus, fresh water mixes with recirculated water coming back from the growing area 3 and passes through the UV light box 45 to remove organic contaminants. The treated water is then piped into the main water tank 21. Nutrients are pumped from a nutrient tank 47 by peristaltic pumps 48 into the main water tank 21. The nutrient rich water is then pumped back into the growing area 3 by a submerged pump 49 located in the water tank 21. The submerged pump 49 has four separate pipes outlets, each pipe outlet being for a respective layer of cultivation. The four outlet pipes are all contained in the main irrigation pipe 20 and each pipe outlet is connected to the distribution pipe 22 for the cultivation layer 12 associated with that pipe outlet. In case of overflow, a pressure valve will open by or at the bottom of the water tank 21 to evacuate the overflow water into evacuation piping 51.

The air circulation system 41 has an air inlet 52 with a set of filters 53 wherein the air inlet 52 is connected to a cooler 54 that pumps or sucks in fresh air via the air inlet 52. The cooler 54 also sucks in air from the growing area 3 through a second air inlet pipe 55. Once the air is cooled, it is sent back into the growing area 3 by an outlet pipe 56 from the cooler 54. An ozone generator 57 is connected to the second air inlet pipe 55 shortly before it reaches the cooler 54. The evacuation piping 51 is also connected to the cooler 54 to remove the condensate water from the cooler 54

An environment control system 58 that monitors the growing environment and controls all the systems is located in the support area 4 on top of, and in communication with, a control box 59 for controlling the lift mechanisms 14, 15 and conveyor mechanisms 16.

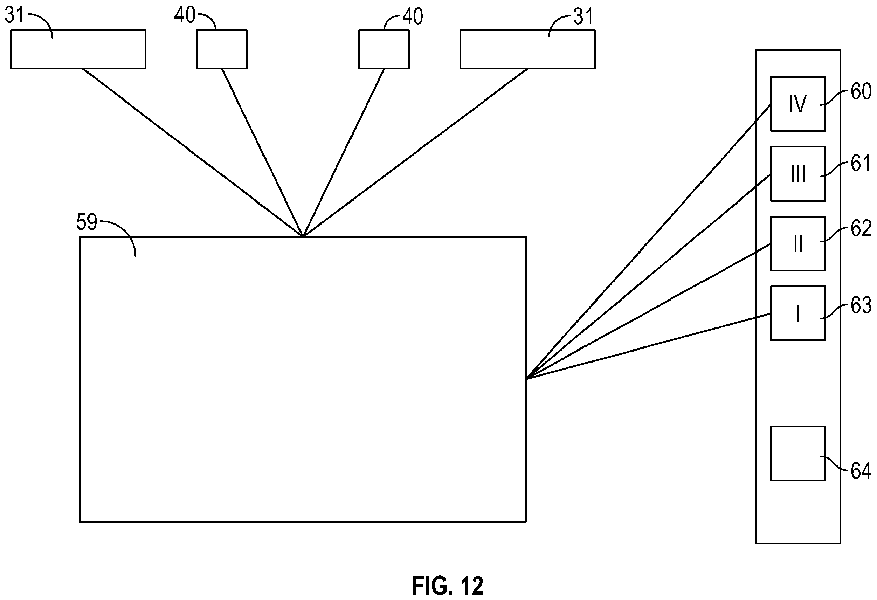

Referring to Figure 12, the control box 59 for controlling the lift and conveyor mechanisms is configured to send signals to actuators to operate different motors simultaneously. The belt motors 31 operate their associated gears to synchronize movement of the drive belts 30 of the lift mechanism 14, 15 so that the carrying platform 37 remains horizontal when the main member 29 is moved upwards or downwards. The piston motors 40 operate the piston units 36 of the lift mechanism main member 29 simultaneously to deploy or retract the carrying platform 37 for picking up or dropping off the elongated plant container 9. The control box 59 is also configured to send signals to an actuator to operate a motor that drives the conveyor mechanism 16 for each respective layer 12.

The control box 59 is operated by pressing the control buttons 8 located on the external front side of the housing 2. The button 60 numbered "IV" causes the front elongated plant container on the 4^{th} or top shelf to be brought to the delivery door 6 for harvesting, trimming or removing. The button 61 numbered "III" causes the front elongated plant container of the 3^{rd} or second from top shelf to be brought to the delivery door 6 for harvesting, trimming or removing. The button 62 numbered "II" causes the front elongated plant container of the 2^{nd} or second from bottom shelf to be brought to the delivery door 6 for harvesting, trimming or removing. The button 63 numbered "I" is used to bring a new elongated plant container 9 inside the housing 2 of the apparatus 1. The last button 64 is only used for switching on display lights which may be LEDs.

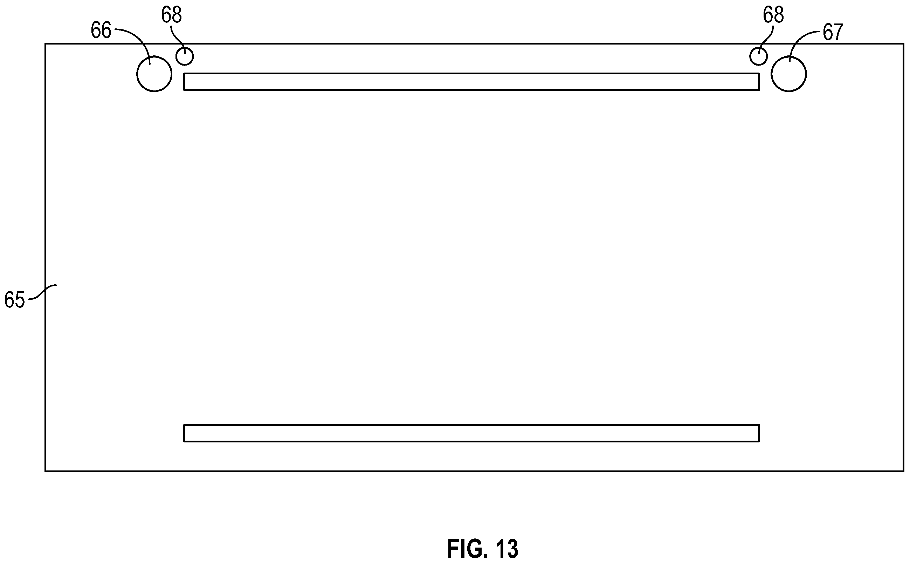

Referring to Figure 13, a sheet 65, which may be of metal, separates the growing area 3 from the support section 4 below. It is designed to prevent any passage of contaminant or pollutant. It has an opening 66 for the main irrigation pipe 18 that carries water from the main tank 21 to the plants 11 and an opening 67 for the pipe 27 returning water from the elongated plant containers 9 back to the tank 21. The sheet 65 also has smaller openings 68 for electric cables controlling and providing energy to the growth lighting 19.

The hydroponic apparatus 1 may be installed in homes or houses, restaurants, hotels, clinics or yachts, for example.

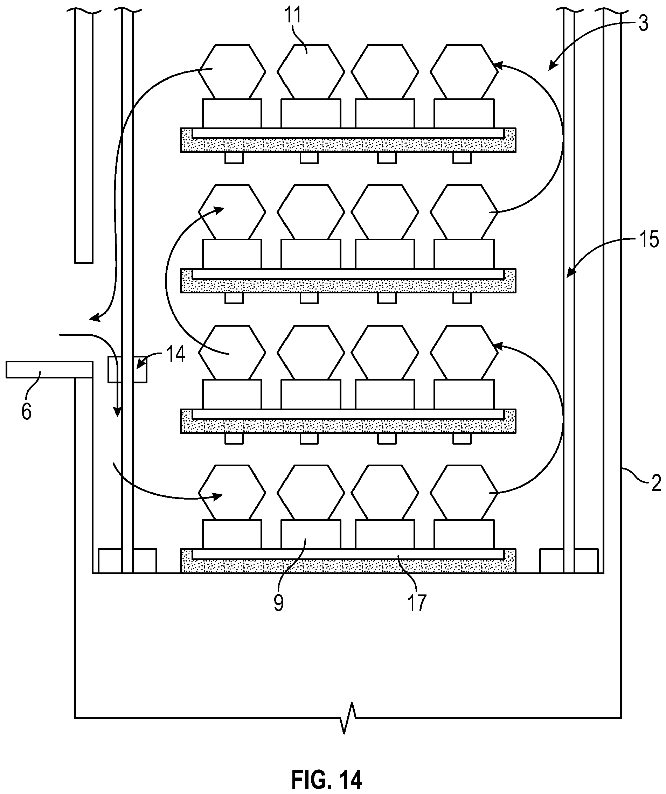

Referring to Figure 14, in use, the delivery door 6 in the front of the housing 2 is opened. This may require a password to first be entered on a keypad or some other form of actuating means to be used to enable the delivery door 6 to be opened. This prevents unauthorized persons gaining access to the growing area 3. The delivery door 6 is opened by a hydraulic system consisting of two hydraulic pumps extending two hydraulic legs to open the door 6 to the outside. The hydraulic system may be actuated electronically.

An elongated plant container 9, with pre-germinated or not yet germinated seeds, is inserted into the housing 2 onto the carrying platform 37 of the L-shaped member 35 of the front lift mechanism 14 wherein the L-shaped member is in its retracted position. The front lift mechanism 14 will bring the elongated plant container 9 to the bottom layer 12a. The piston units 36 then extend the L-shaped member 35 towards the rear so that the L-shaped member 35 moves between the front end of the two horizontal conveyors 17 of the bottommost conveyor mechanism 16. The L-shaped member 35 continues to move downwards so that the elongated plant container 9 on the carrying platform 37 now sits on the conveyors 17. The piston units 36 then move the L-shaped member 35 to its retracted position. The conveyors 17 move the elongated plant container 9 towards the rear lift mechanism 15.

The rear lift mechanism 15 initially has its main member 29 located at the bottom of the growing area 3. The piston units 36 of the rear lift mechanism 15 then extend their L-shaped member 35 towards the front so that the L-shaped member 35 is between the rear end of the two horizontal conveyors 17 before the rear lift mechanism 15 lifts the elongated plant container 9 from the conveyors 17. The piston units 36 retract the L-shaped member 35 so that it is not blocked by the conveyors 17 of the level above. The rear lift mechanism 15 raises the L-shaped member 35 to just above the conveyors 17 of the next level and the piston units 36 extend the L-shaped member 35 forward. The rear lift mechanism 15 then lowers the L-shaped member 35 slightly so that the elongated plant container 9 now sits on the conveyors 17 of the next level.

Thus, the conveyor mechanism 16 of the bottom level moves in one direction, and an elongated plant container 9 on it is lifted up by the rear lift mechanism 15 to the conveyor mechanism 16 of the next level where it is then moved in the opposite direction towards the front lift mechanism 14. The elongated plant container 9 alternates the direction of travel on each successive level 12.

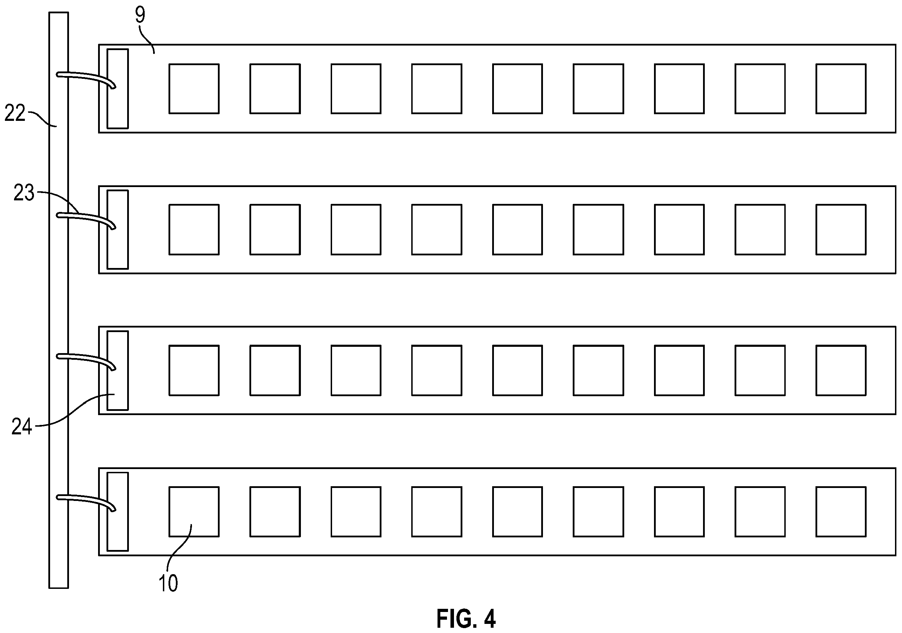

As an elongated plant container 9 is moved from one end of the conveyor mechanism 16 at one layer 12 to the other end, the plants 11 in the container 9 grow. The conveyors 17 move the elongated plant container 9 at a set speed to successive locations. At each location the elongated plant container 9 is positioned so that its wide opening 24 can receive water from the relevant flexible pipe 23 (see Figure 4). The wide opening 24 increases the margin of error should the conveyors 17 not stop the container 9 at the exact location that it is meant to stop. In a specific embodiment, there may be up to three centimetres of margin on either side of where the conveyors 17 should stop without threatening the continuity of irrigation to the elongated plant container 9.

The horizontal movement follows the plant's growth cycle and provides a gentle change of the plant's access to light and nutrients. When the elongated plant container 9 reaches the other end of the conveyor mechanism 16, the plants 11 in the container 9 should have reached a certain level of maturity and are ready to move into another phase at another layer 12 where the requirements of the plants 11 may be different and the light/nutrients supplied may be adjusted accordingly.

The growing area 3 has four different cultivation layers 12 to provide different growing environments to the different phases of a plant's growth cycle. Each layer 12 is fed by a respective pipe outlet of the main irrigation pipe 20 coming from the main water tank 21. The main tank 21 may be subdivided into different sections with different nutrient concentration levels wherein each section is connected to a respective pipe outlet. The flow of water can be changed to bring more nutrients to a selected layer 12. Each layer 12 also has an associated timer to adjust the length of time the growing lighting 19 is on to suit the plants' requirements as they grow. Since the layers 12 are stacked, hot air and humidity rises so that the top layer will have slightly different environment which may be better suited for plants 11 at the latter part of their growth than the lower layers which are better suited for plants 11 in earlier stages of their growth.

Once the plants 11 in the elongated plant container 9 are at the highest level they are ready to be harvested. The front lift mechanism 14 will then return the elongated plant container 9 to the delivery door 6 from where the plants 11 of the container 9 can be harvested. The delivery door 6 may only be able to be opened once the front lift mechanism 14 has delivered the elongated plant container 9 to the delivery door 6.

A person may view the growing process through the windows 2 and the transparent delivery door 4 without contaminating the growing area 3.

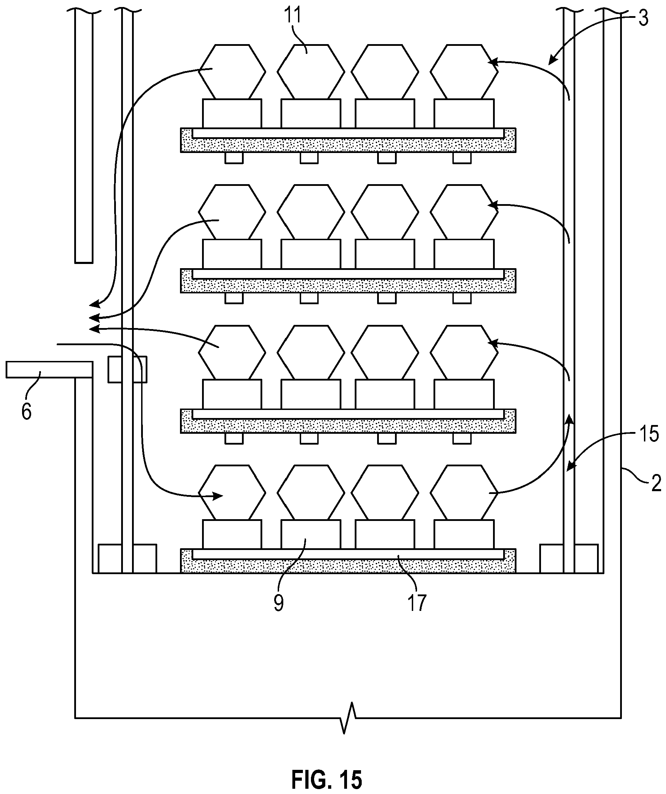

Referring to Figure 15, where only one type of fast growing plant 11 is grown, the rear lift mechanism 15 will lift elongate plant containers 9 from the bottom layer to any of the layers above where plants 11 in the container 9 can grow before the container 9 is brought back by the front lift mechanism 14 to the delivery door 6.

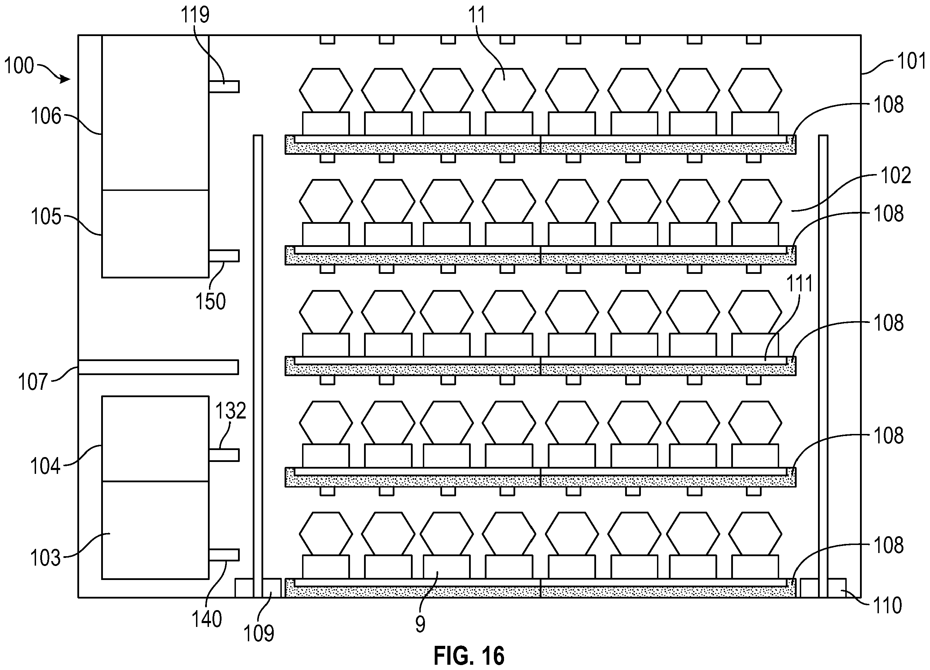

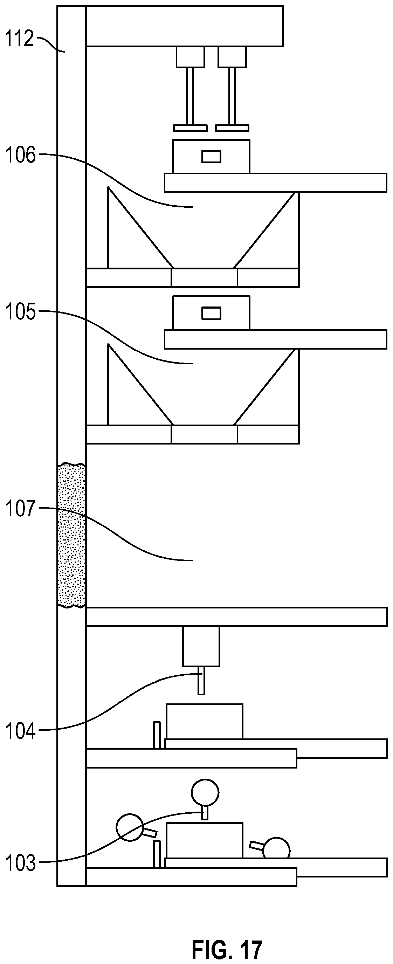

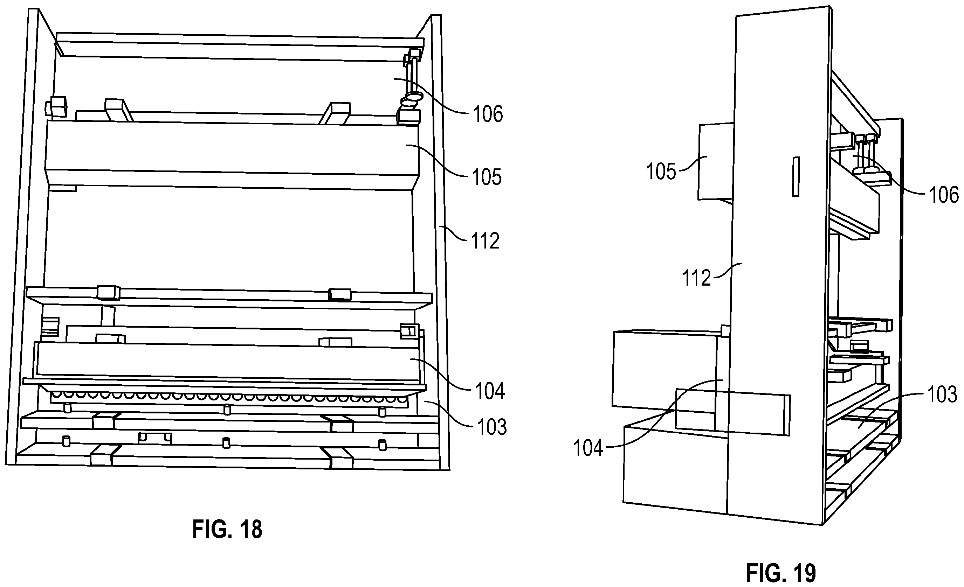

Referring to Figures 16 to 19, a hydroponic apparatus or pod or system 100 according to a second embodiment of the invention is a modification of the hydroponic apparatus 1 of the first embodiment and is housed in a container 101. The hydroponic apparatus 100 provides a multilayer cultivation system in a growing area 102 coupled with a plurality of robotic stations 103, 104, 105, 106 stacked or mounted on one side of the growing area 102.

The lowermost robotic station 103 is an automatic cleaning system of an elongated plant container 9. The next robotic station 104 is a sowing machine. The next robotic station 105 is a growing media cleaning station and the topmost an automated harvesting robotic station 106. There is also a manual station 107 between the sowing machine robotic station 104 and the growing media robotic station 105 to deal with potential issues arising during the growing process, to solve issues or glitch by hand. A person can insert their hands in the manual station 107 and work on an elongated plant container 9.

The growing area 102 is shown with a stack of cultivation layers 108 and there is a lift mechanism 109, 110 at either end of the conveyor mechanism 111 in the stack of layers 108. The lift mechanisms have the same structure as those described in the first embodiment except that the piston units can extend further to either side of the lift mechanism. One of the lift mechanisms 109, henceforth known as the first lift mechanism, is between the stack of cultivation layers 108 and the stack of robotic stations 103, 104, 105, 106 and is used to transfer an elongated plant container 9 between the conveyor mechanism 111 of any one cultivation layer 108 and any one robotic station.

A frame 112, which may be of metal, securely holds the different robotic stations 103, 104, 105, 106.

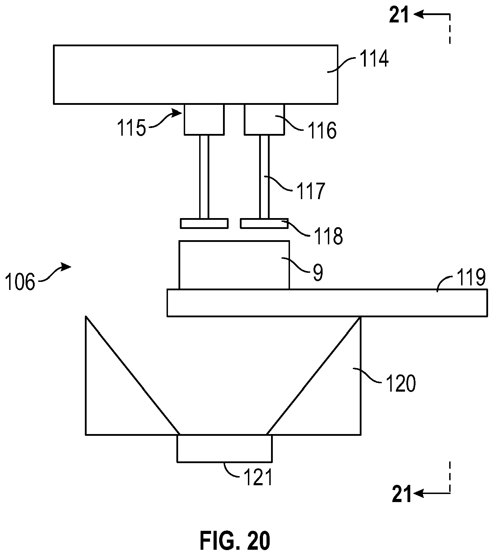

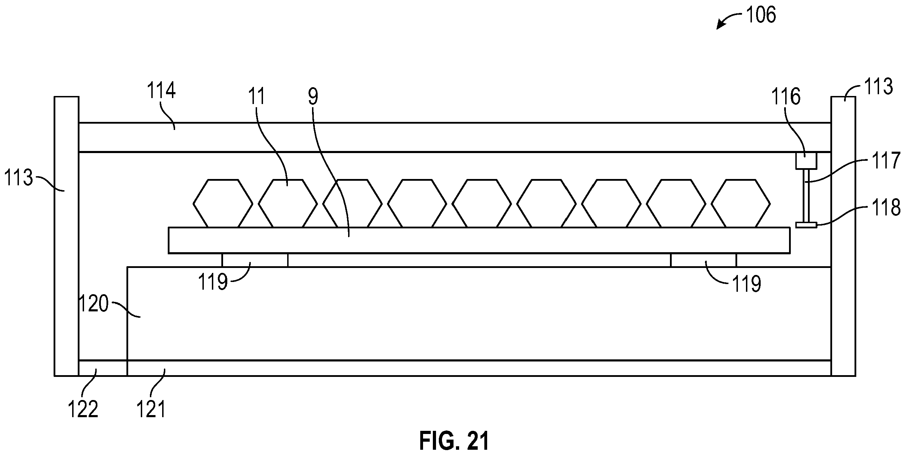

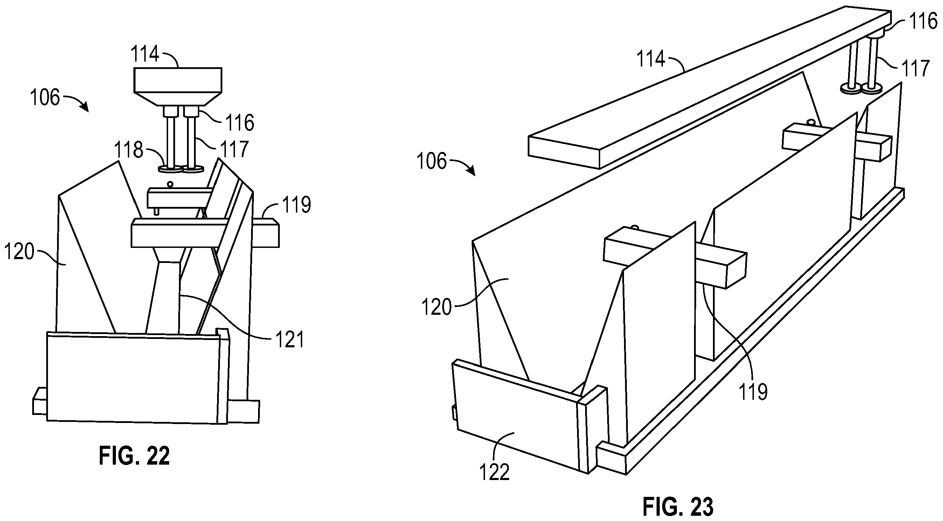

Referring to Figures 20 to 23, the harvesting robotic station 106 is held between vertical frame sections 113 of the frame 112, and an overhead rail 114 spans between the vertical frame sections 113. A cutting system 115 is arranged to hang from, and travel along, the rail 114 and comprises a pair of electric motors 116 which each spin a respective gear arm 117. Each gear arm 117 extends downwards and has a cutting blade 118 at its lowermost end. When the gear arms 117 spin they cause the blades 118 to rotate.

The harvesting robotic station 106 has a conveyor mechanism comprising a pair of conveyors 119 to receive an elongated plant container 9 from the first lift mechanism 109 which has collected it from one of the cultivation layers 108 in the growing area 102. The first lift mechanism 109 is able to do this since the piston units of the main member of the lift mechanism 109 can extend to either side of the lift mechanism 109.

The conveyors 119 of the harvesting robotic station 106 move the received elongated plant container 9 beneath the rail 114. The cutting system 115 then moves along the rail 114 so that the spinning blades 118 cut stems and/or leaves of the plants 11 off the elongated plant container 9, and the cut parts of the plants drop into a hopper 120 below which funnels them onto a main conveyor 121 that transports them to a storage box 122 where they can be collected.

The conveyors 119 of the harvesting robotic station 106 then move the elongated plant container 9 back to the first lift mechanism 109 which can deliver it back into the growing area 102.

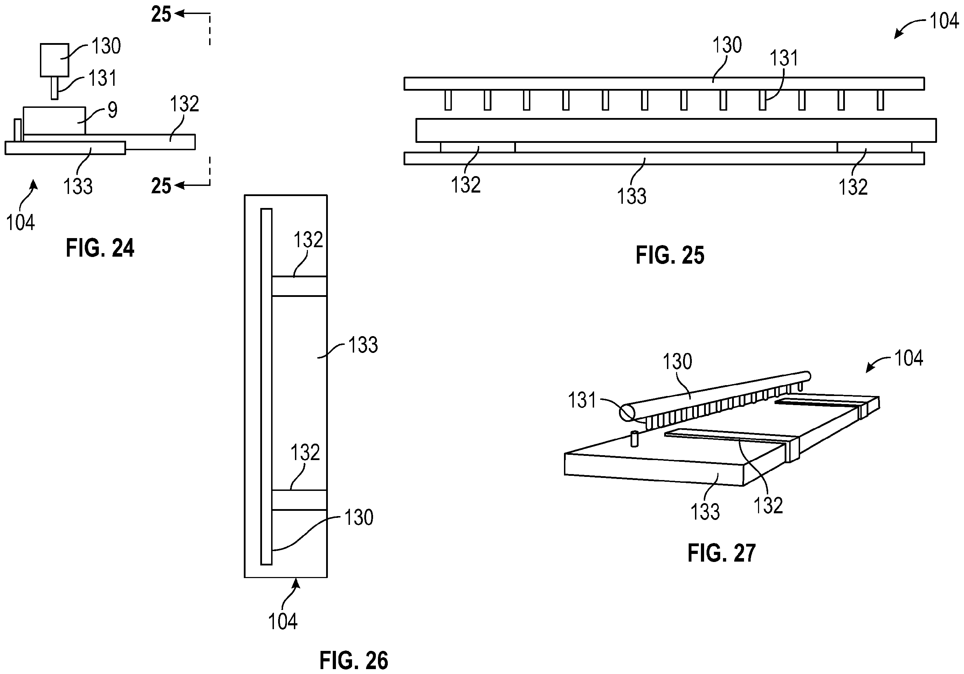

Referring to Figures 24 to 27, the sowing machine robotic station 104 comprises a sowing machine 130 held by part of the main frame 112. The sowing machine 130 has a series of pipes 131 extending down from it that are arranged to deliver seeds directly onto growing media located in an elongated plant container 9 that is positioned beneath it by a set of conveyors 132 supported by a frame section 133 of the main frame 112.

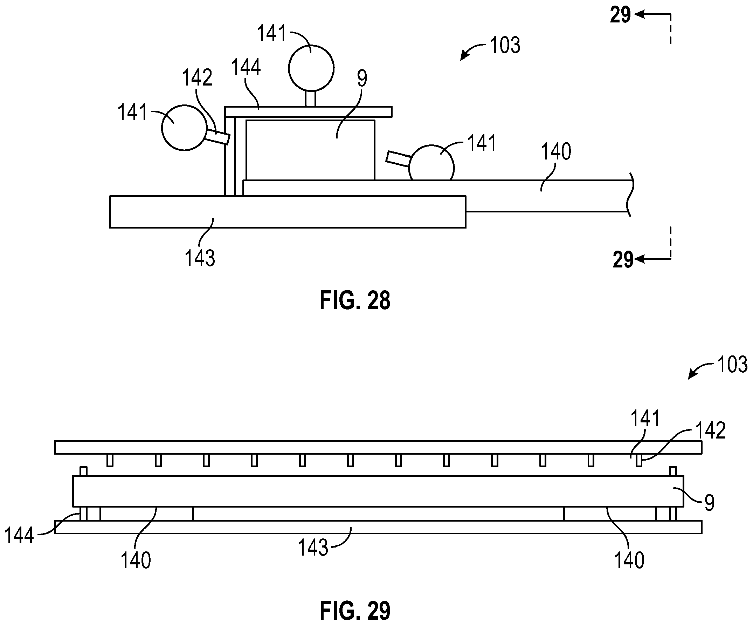

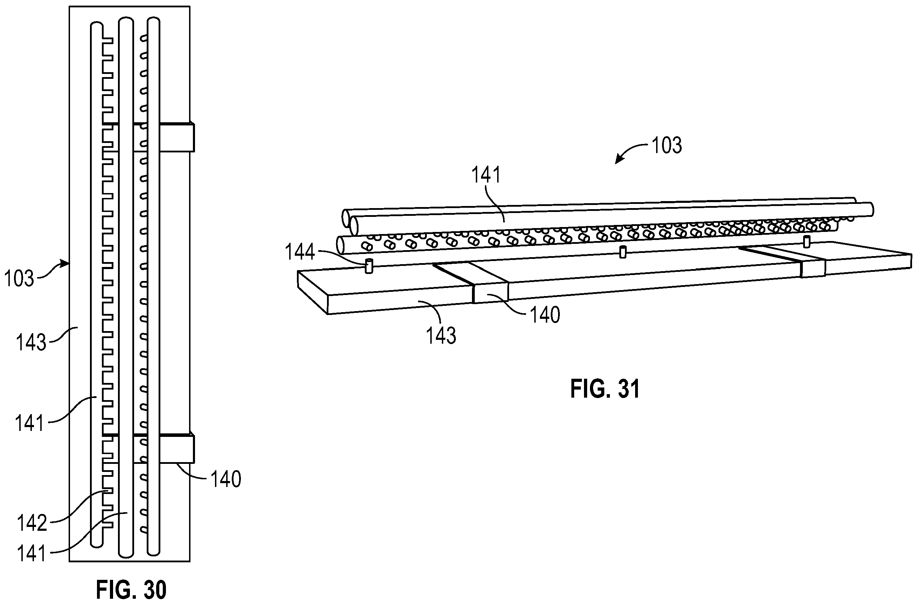

Referring to Figures 28 to 31, the elongated plant container robotic cleaning station 103 comprises a set of conveyors 140 to bring the elongated plant container 9 into the right position. The robotic cleaning station 103 comprises three pipes 141 which each is arranged to deliver either steam or pressurized water. Each pipe 141 has a series of tubes 142 to precisely and efficiently orientate the stream of water or steam onto the elongated plant container 9 to be cleaned. The whole system is supported by a frame section 143 of the main frame 112. Before cleaning commences, L-shaped metal springs 144 are tilted into place to retain the elongated plant container 9 both vertically and horizontally preventing it from moving during the cleaning process.

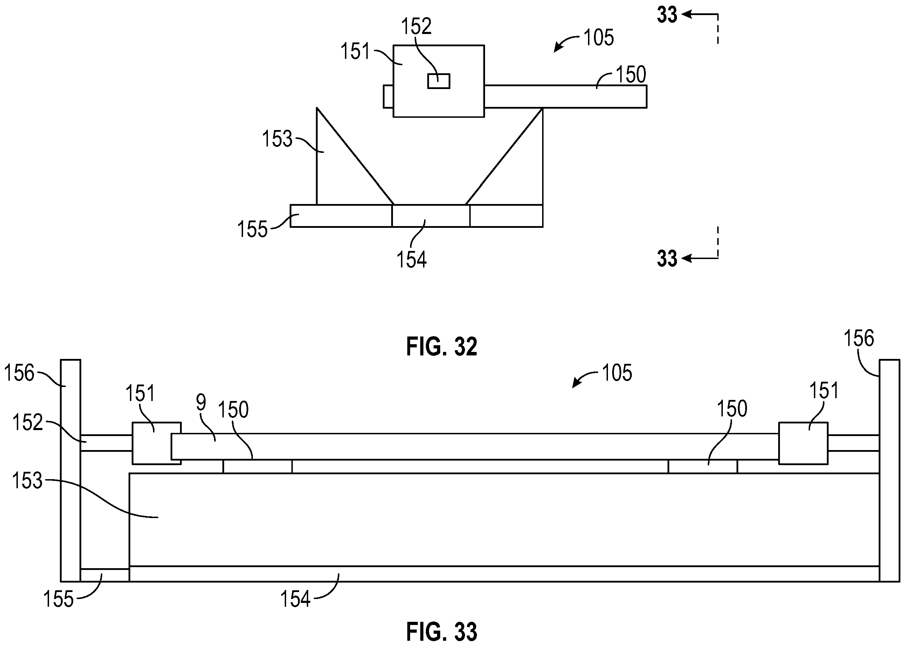

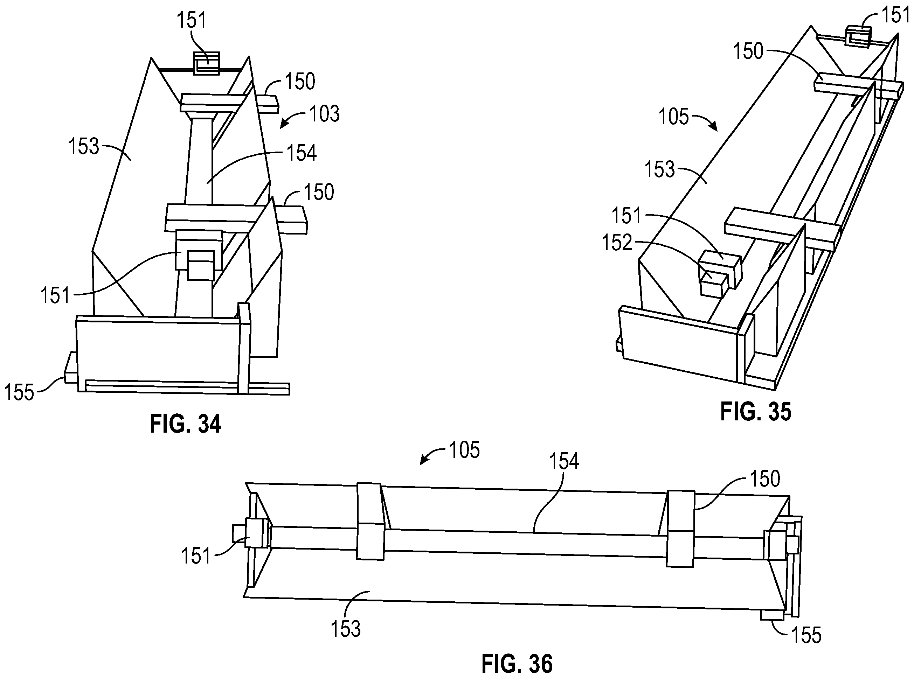

Referring to Figures 32 to 36, the growing media robotic cleaning station 105 comprises a set of conveyors 150 to bring the elongated plant container 9 into the right position where the container 9 is fitted between a pair of receptacles 151. The receptacles 151 are connected to a motor 152 which is configured to rotate the elongated plant container 9 through 180°. Thus, unwanted residues from the previous growth cycle (dead leaves, roots) will fall from the container 9 into a hopper 153 to be brought into a disposable box by conveyors 154 and 155. The whole system is supported by frame sections 156 of the main frame 112.

The conveyors of the various robotic stations are arranged to transport an elongated plant container 9 to and from the first lift mechanism 109 which can bring the elongated plant container 9 from, and deliver it back to, the growing area 102.

The hydroponic apparatus 100 may have an environment control system and a control box like that of the first embodiment and the environment control system and/or the control box controls the robotic stations 103, 104, 105, 106.

The hydroponic apparatus 100 is a larger version of the hydroponic apparatus 1 of the first embodiment and is designed for use in oil rigs, large ships, private islands, large hotels and hospitals, for example.

Whilst particular embodiments have been described, it will be understood that various modifications may be made without departing from the scope of the claimed invention.

An air-lock function may be activated every time the delivery door is about to be opened. The air-lock may be backed up by a positive pressure environment inside the housing, and by heating, ventilation and air-conditioning equipment of the apparatus using filtered and treated air. The delivery door may be fitted with an alarm that would automatically send a notification to the owner of the apparatus should the controlled environment have been penetrated without permission. The delivery door may be located at any suitable place on the front of the housing. It may be located on the lower horizontal side or at the bottom of the growing area or it may be located on one side of the growing area. The delivery door may be arranged to swing outwardly about a vertical axis.

The apparatus may have solar panels for generating energy when there is a power shortage or failure. These solar panels may be foldable.

The apparatus may include a system of lasers and cameras to be used to identify the ripeness of each plant.

The environmental control system may be operated by a touchscreen fitted on the side of the housing or on a separate tablet. The touchscreen can access all the information on monitoring plant growth and operation of equipment. The environmental control system may be accessed remotely so that it can be monitored remotely. A nutritionist may have access to the environmental control system if required.

## Claims

1. A hydroponic apparatus (1) comprising an enclosed housing (2), a plurality of areas (12) provided in the enclosed housing for supporting plant containers (9) for containing seeds or plants (11) to be grown, a conveyor system (16, 14, 15) for moving the plant containers in each area and/or from one area to another area within the enclosed housing, and a control system (58) for controlling environmental plant growing conditions in the enclosed housing, whereby the conveyor system is arranged to move the plant containers to different areas within the enclosed housing at different stages of growth of the plants in the containers, **characterized in that** the conveyor system (16) is arranged to tilt the plant containers (9) relative to the horizontal to enable water to drain from the plant containers.

2. The hydroponic apparatus as claimed in claim 1, wherein the areas within the enclosed housing (2) are a plurality of levels (12) within said housing.

3. The hydroponic apparatus as claimed in claim 2, wherein the conveyor system (16, 14, 15) is arranged to move the plant containers (9) in substantially horizontal directions on each level (12) and substantially vertical directions from one level to another level within the enclosed housing (2).

4. The hydroponic apparatus as claimed in claim 2 or 3, wherein the conveyor system comprises a conveyor mechanism (16) for moving the plant containers (9) on each level (12), a lift mechanism (14, 15) for moving the plant containers from one level to another level, and a transfer device (35) for transferring the plant containers from the conveyor mechanism on one level to the lift mechanism and from the lift mechanism to the conveyor mechanism on another level.

5. The hydroponic apparatus as claimed in any preceding claim, including a support area (4) for containing an irrigation system (18) for irrigating the plants (11) in the containers (9) and an air circulation system (41) for circulating air within the enclosed housing (2).

6. The hydroponic apparatus as claimed in claim 5, including a pipe network (22, 23) for transferring water from the irrigation system (18) to each of the plant containers (9) supported in the areas (12) within the housing (2).

7. The hydroponic apparatus as claimed in claim 5 or 6, wherein the air circulating system (41) comprises an air cooler (54) and an ozone generator (57) for circulating cool air and ozone within the enclosed housing (2).

8. The hydroponic apparatus (100) as claimed in any preceding claim, including a plurality of robotic stations (103, 104, 105, 106), and the conveyor system (111) is arranged to move the plant containers (9) to and from each of the robotic stations.

9. The hydroponic apparatus as claimed in claim 8 when dependent on claim 4, wherein the transfer device (35) of the conveyor system is arranged to move the plant containers (9) to and from the robotic stations (103, 104, 105, 106).

10. The hydroponic apparatus as claimed in claim 8 or 9, wherein each robotic station (103, 104, 105, 106) has a conveyor mechanism (119, 132, 140, 150) for moving a said plant (11) at said robotic station.

11. The hydroponic apparatus as claimed in claim 8, 9 or 10, wherein the robotic stations comprise one or more of an automatic cleaning station (103) for cleaning the plant containers (9), a sowing machine (104) for sowing seeds in the plant containers, a growing media cleaning station (105) for cleaning unwanted plant residue from the plant containers, and an automated harvesting station (106) comprising cutters (118) for cutting parts of plants in the containers and a collector (122) for collecting the cut parts.

12. The hydroponic apparatus as claimed in any preceding claim, including a delivery door (6) which provides the only access to a growing area (3) containing the areas (12) provided in the enclosed housing (2) for supporting the plant containers (9).

13. A method for growing plants comprising the steps of:-storing plant containers (9) containing seeds or plants (11) in an enclosed housing (2);
controlling environmental plant growing conditions in the enclosed housing (2); and
automatically moving the plant containers (9) via a conveyor system (16, 14, 15) to different areas (12) within the enclosed housing (2) depending on the different stages of growth of the plants (11) in the containers, and **characterized in that** the conveyor system (16) is arranged to tilt the plant containers (9) relative to the horizontal to enable water to drain from the plant containers.

14. The method as claimed in claim 13, including the step of automatically moving the plant containers (9) within the enclosed housing (2) to and from robotic stations (103, 104, 105, 106), at which one or more of the following activities can be automatically carried out:
cleaning the plant containers (9);
sowing seeds in the plant containers (9);
removing unwanted plant residue from the containers (9); and
cutting parts from the plants (11) in the containers (9) and collecting the cut parts.

## Patentansprüche

1. Hydroponische Anlage (1), umfassend ein geschlossenes Gehäuse (2), eine Vielzahl von Bereichen (12), die in dem geschlossenen Gehäuse zum Tragen von Pflanzenbehältern (9) zum Enthalten von Samen oder anzubauenden Pflanzen (11) vorgesehen sind, ein Fördersystem (16, 14, 15) zum Bewegen der Behälter in jeden Bereich und/oder von einem Bereich zu einem anderen Bereich innerhalb des geschlossenen Gehäuses und ein Kontrollsystem (58) zum Kontrollieren von Pflanzenanbau-Umweltbedingungen in dem geschlossenen Gehäuse, wobei das Fördersystem dazu eingerichtet ist, die Pflanzenbehälter zu unterschiedlichen Anbaustadien der Pflanzen in den Behältern in andere Bereiche innerhalb des geschlossenen Gehäuses zu bewegen, **dadurch gekennzeichnet, dass** das Fördersystem (16) dazu eingerichtet ist, die Pflanzenbehälter (9) im Verhältnis zu der Horizontalen zu neigen, um zu ermöglichen, dass Wasser aus den Pflanzenbehältern abläuft.

2. Hydroponische Anlage nach Anspruch 1, wobei die Bereiche innerhalb des geschlossenen Gehäuses (2) eine Vielzahl von Ebenen (12) innerhalb des Gehäuses sind.

3. Hydroponische Anlage nach Anspruch 2, wobei das Fördersystem (16, 14, 15) dazu eingerichtet ist, die Pflanzenbehälter (9) in im Wesentlichen horizontalen Richtungen auf jeder Ebene (12) und im Wesentlichen vertikalen Richtungen von einer Ebene zu einer anderen Ebene innerhalb des geschlossenen Gehäuses (2) zu bewegen.

4. Hydroponische Anlage nach Anspruch 2 oder 3, wobei das Fördersystem einen Fördermechanismus (16) zum Bewegen der Pflanzenbehälter (9) auf jeder Ebene (12), einen Hebemechanismus (14, 15) zum Bewegen der Pflanzenbehälter von einer Ebene zu einer anderen Ebene und eine Überführungsvorrichtung (35) zum Überführen der Pflanzenbehälter von dem Fördermechanismus auf einer Ebene zu dem Hebemechanismus und von dem Hebemechanismus zu dem Fördermechanismus auf einer anderen Ebene umfasst.

5. Hydroponische Anlage nach einem vorhergehenden Anspruch, beinhaltend einen Tragebereich (4) zum Enthalten eines Bewässerungssystems (18) zum Bewässern der Pflanzen (11) in den Behältern (9) und eines Luftumwälzungssystems (41) zum Umwälzen von Luft innerhalb des geschlossenen Gehäuses (2).

6. Hydroponische Anlage nach Anspruch 5, beinhaltend ein Rohrnetz (22, 23) zum Überführen von Wasser von dem Bewässerungssystem (18) zu jedem der Pflanzenbehälter (9), die in den Bereichen (12) innerhalb des Gehäuses (2) getragen werden.

7. Hydroponische Anlage nach Anspruch 5 oder 6, wobei das Luftumwälzungssystem (41) einen Luftkühler (54) und einen Ozongenerator (57) zum Umwälzen von kühler Luft und Ozon innerhalb des geschlossenen Gehäuses (2) umfasst.

8. Hydroponische Anlage (100) nach einem vorhergehenden Anspruch, beinhaltend eine Vielzahl von Roboterstationen (103, 104, 105, 106), und wobei das Fördersystem (111) dazu eingerichtet ist, die Pflanzenbehälter (9) zu und von jeder der Roboterstationen zu bewegen.

9. Hydroponische Anlage nach Anspruch 8 bei Abhängigkeit von Anspruch 4, wobei die Überführungsvorrichtung (35) des Fördersystems dazu eingerichtet ist, die Pflanzenbehälter (9) zu und von den Roboterstationen (103, 104, 105, 106) zu bewegen.

10. Hydroponische Anlage nach Anspruch 8 oder 9, wobei jede Roboterstation (103, 104, 105, 106) einen Fördermechanismus (119, 132, 140, 150) zum Bewegen einer der Pflanzen (11) an der Roboterstation aufweist.

11. Hydroponische Anlage nach Anspruch 8, 9 oder 10, wobei die Roboterstationen eine oder mehrere von einer automatischen Reinigungsstation (103) zum Reinigen der Pflanzenbehälter (9), einer Sämaschine (104) zum Säen von Samen in den Pflanzenbehältern, einer Nährmedienreinigungsstation (105) zum Reinigen von unerwünschten Pflanzenresten aus den Pflanzenbehältern und einer automatischen Erntestation (106), die Schneideeinrichtungen (118) zum Abschneiden von Teilen von Pflanzen in den Behältern und eine Sammeleinrichtung (122) zum Sammeln der abgeschnittenen Teile umfasst, umfassen.

12. Hydroponische Anlage nach einem vorhergehenden Anspruch, beinhaltend eine Lieferklappe (6), die den einzigen Zugriff zu einem Anbaubereich (3) bereitstellt, der die Bereiche (12) enthält, die in dem geschlossenen Gehäuse (2) zum Tragen der Pflanzenbehälter (9) vorgesehen sind.

13. Verfahren zum Anbau von Pflanzen, umfassend die Schritte:
Lagern von Pflanzenbehältern (9), die Samen oder Pflanzen (11) enthalten, in einem geschlossenen Gehäuse (2);
Kontrollieren von Pflanzenanbau-Umweltbedingungen in dem geschlossenen Gehäuse (2) und
automatisches Bewegen der Pflanzenbehälter (9) mittels eines Fördersystems (16, 14, 15) zu unterschiedlichen Bereichen (12) innerhalb des geschlossenen Gehäuses (2) in Abhängigkeit von den unterschiedlichen Anbaustadien der Pflanzen (11) in den Behältern, und **dadurch gekennzeichnet, dass** das Fördersystem (16) dazu eingerichtet ist, die Pflanzenbehälter (9) im Verhältnis zu der Horizontalen zu neigen, um zu ermöglichen, dass Wasser aus den Pflanzenbehältern abläuft.

14. Verfahren nach Anspruch 13, beinhaltend den Schritt des automatischen Bewegens der Pflanzenbehälter (9) innerhalb des geschlossenen Gehäuses (2) zu und von Roboterstationen (103, 104, 105, 106), an denen eine oder mehrere der folgenden Aktivitäten automatisch durchgeführt werden können:
Reinigen der Pflanzenbehälter (9);
Säen von Samen in den Pflanzenbehältern (9);
Entfernen von unerwünschten Pflanzenresten aus den Behältern (9) und
Abschneiden von Teilen von den Pflanzen (11) in den Behältern (9) und Sammeln der abgeschnittenen Teile.

## Revendications

1. Un appareil hydroponique (1) comprenant un boîtier fermé (2), une pluralité de zones (12) prévues dans un boîtier fermé pour supporter des conteneurs de plantes (9) destinés à accueillir des graines ou des plantes (11) à des fins de culture, un dispositif de convoyeur (16, 14, 15) conçu pour déplacer les conteneurs de plantes à l'intérieur du boîtier fermé, que ce soit d'une zone à une autre ou au sein d'une même zone, et un système de commande (58) visant à réguler les conditions environnementales de croissance des plantes dans le boîtier fermé. Le système de transport est configuré pour acheminer les conteneurs de plantes vers différentes zones au sein du boîtier fermé à différents stades de croissance des plantes dans les conteneurs, **caractérisé en ce que** le système de convoyeur (16) est agencé pour incliner les conteneurs de plantes (9) par rapport à l'horizontale pour permettre à l'eau de s'écouler hors des conteneurs de plantes.

2. L'appareil hydroponique selon la revendication 1, dans lequel les zones à l'intérieur du boîtier fermé (2) sont une pluralité de niveaux (12) à l'intérieur dudit boîtier.

3. L'appareil hydroponique selon la revendication 2, dans lequel le système de convoyeur (16, 14, 15) est agencé pour déplacer les conteneurs de plantes (9) dans des directions sensiblement horizontales sur chaque niveau (12) et dans des directions sensiblement verticales d'un niveau à un autre niveau à l'intérieur du boîtier fermé (2).

4. L'appareil hydroponique selon la revendication 2 ou 3, dans lequel le système de convoyeur comprend un mécanisme de convoyeur (16) pour déplacer les conteneurs de plantes (9) sur chaque niveau (12), un mécanisme de levage (14, 15) pour déplacer les conteneurs de plantes d'un niveau à un autre niveau, et un dispositif de transfert (35) pour transférer les conteneurs de plantes du mécanisme de convoyeur sur un niveau au mécanisme de levage et du mécanisme de levage au mécanisme de convoyeur à un autre niveau.

5. L'appareil hydroponique selon l'une quelconque des revendications précédentes, comprenant une zone de support (4) pour contenir un système d'irrigation (18) pour l'irrigation des plantes
(11) dans les conteneurs de plantes (9) et un système de circulation d'air (41) pour faire circuler l'air à l'intérieur du boîtier fermé (2).

6. L'appareil hydroponique selon la revendication 5, comprenant un réseau de canalisations (22, 23) pour transférer l'eau du système d'irrigation (18) à chacun des conteneurs de plantes (9) supportés dans les zones (12) à l'intérieur du boîtier (2).

7. L'appareil hydroponique selon la revendication 5 ou 6, dans lequel le système de circulation d'air (41) comprend un refroidisseur d'air (54) et un générateur d'ozone (57) pour faire circuler de l'air frais et de l'ozone à l'intérieur du boîtier fermé (2).

8. L'appareil hydroponique (100) selon l'une quelconque des revendications précédentes, comprenant une pluralité de stations robotisées (103, 104, 105, 106), et le système de convoyeur (111) est agencé pour déplacer les conteneurs de plantes (9) vers et depuis chacune des stations robotisées.

9. L'appareil hydroponique selon la revendication 8 lorsqu'il dépend de la revendication 4, dans lequel le dispositif de transfert (35) du système de convoyeur est agencé pour déplacer les conteneurs de plantes (9) vers et depuis les stations robotisées (103, 104, 105, 106.

10. L'appareil hydroponique selon la revendication 8 ou 9, dans lequel chaque station robotique (103, 104, 105, 106) est dotée d'un mécanisme de convoyeur (119, 132, 140, 150) pour déplacer ladite plante (11) vers ladite station robotique.

11. L'appareil hydroponique selon la revendication 8, 9 ou 10, dans lequel les stations robotisées comprennent une ou plusieurs stations de nettoyage automatique (103) pour nettoyer les conteneurs de plantes (9), un semoir (104) pour semer des graines dans les conteneurs de plantes, une station de nettoyage de milieux de culture (105) pour le nettoyage des résidus végétaux indésirables provenant des conteneurs de plantes, et une station de récolte automatisée (106) comprenant des couteaux (118) pour couper des parties de plantes dans les conteneurs et un collecteur (122) pour collecter les parties coupées.

12. L'appareil hydroponique selon l'une quelconque des revendications précédentes, comprenant une porte de livraison (6) qui fournit le seul accès à une zone de culture (3) contenant les zones (12) prévues dans le boîtier fermé (2) pour supporter les conteneurs de plantes (9).

13. Un procédé pour faire pousser des plantes comprenant les étapes suivantes :
stocker des conteneurs de plantes (9) contenant des graines ou des plantes (11) dans un boîtier fermé (2) ;
contrôler les conditions environnementales de croissance des plantes dans le boîtier fermé (2) ; et déplacer automatiquement les conteneurs de plantes (9) via un système de convoyeur (16, 14, 15) vers différentes zones (12) à l'intérieur du boîtier fermé (2) en fonction des différents stades de croissance des plantes (11) dans les conteneurs, **caractérisé en ce que** le système de convoyeur (16) est agencé pour incliner les conteneurs de plantes (9) par rapport à l'horizontale pour permettre à l'eau de s'écouler hors des conteneurs de plantes

14. Procédé selon la revendication 13, comprenant l'étape consistant à automatiquement déplacer les conteneurs de plantes (9) à l'intérieur du boîtier fermé (2) vers et depuis des stations robotisées (103, 104, 105, 106), au niveau desquelles un ou plusieurs des éléments suivants des activités peuvent être réalisées automatiquement : nettoyage des conteneurs de plantes (9) ; semer des graines dans les conteneurs de plantes (9) ; éliminer les résidus végétaux indésirables des conteneurs de plantes (9) ; et couper des parties des plantes (11) dans les conteneurs de plantes (9) et collecter les parties coupées.
